# EUROPÄISCHE PATENTSCHRIFT

(11) **EP 1 813 484 B1**
(45) Veröffentlichungstag und Bekanntmachung des Hinweises auf die Patenterteilung: **22.04.2009**
(21) Anmeldenummer: 06026663.2
(22) Anmeldetag: 22.12.2006
(51) Int. Cl.: B60R 21/34

(54) **Fahrzeug mit einer in Scharnieren aufgenommen Frontklappe**
Vehicle with a hinged front bonnet
Véhicule doté d'un clapet frontal installé dans des charnières

(30) Priorität: 27.01.2006 DE 102006004016
(43) Veröffentlichungstag der Anmeldung: 01.08.2007
(73) Patentinhaber: AUDI AG, 85045 Ingolstadt (DE)
(72) Erfinder: Dix, Norman, 85055 Ingolstadt (DE); Ickes, Alexander, 85051 Ingolstadt (DE); Roth, Franz, 93336 Steinsdorf (DE); Ritterbusch, Daniel, 85092 Kösching (DE)
(74) Vertreter: Engelhardt, Harald

(56) Entgegenhaltungen:
- WO-A-20/05030539
- JP-A- 11 310 157
- US-A1- 2006 175 844

## Beschreibung

Die Erfindung bezieht sich auf ein Fahrzeug gemäß der Oberbegriff des Anspruchs 1, mit einer in Scharnieren aufgenommen Frontklappe, einem im vorderen Frontklappenbereich angeordneten Schloss und einer einen Aktuator zur Erzeugung einer Linearbewegung umfassenden Vorrichtung zum Anheben der Hinterkante der Frontklappe.

Eine Einrichtung nach dem Oberbegriff des Anspruchs 1 ist aus JP 11 310 157, Fig. 7, bekannt.

Eine weitere Vorrichtung mit einem Aktuator ist beispielsweise aus der DE 202 15 543 U1 bekannt. Dort greift der Aktuator an einem an der Fronthaube angeordneten Scharnier an, welches über den Aktuator angehoben wird, wenn dieser ein entsprechendes Auslösesignal erhält. Beim Anheben der Frontklappe entstehen Relativbewegungen des Schlossbügels im Frontklappenschloss, welches auf der den Scharnieren gegenüberliegenden Seite der Frontklappe angeordnet ist. Diese Relativbewegungen können dazu führen, dass sich in der Frontklappe Spannungen aufbauen oder Kollisionen im Frontendpackage auftreten.

Um dieser Problematik teilweise zu begegnen ist es bekannt, einen Ausgleich darüber anzustreben, dass der Aktuator schwenkbar ausgeführt ist, eine Kulisse vorgesehen wird oder mit einem Auflager gearbeitet wird.

Der vorliegenden Erfindung liegt die Aufgabe zugrunde, mit einfachen Mitteln die vorgenannten Nachteile zu vermeiden und ein stabiles System mit einer verbesserten Kinematik zu schaffen.

Diese Aufgabe wird durch die im Patentanspruch 1 angegebenen kennzeichnenden Merkmale im Zusammenwirken mit den oberbegrifflichen Merkmalen gelöst. Gemäß der vorliegenden Erfindung ist der Aktuator karosseriefest angeordnet ist, so dass er nur eine Linearbewegung in eine vorgegebene Richtung ausführen kann. Durch die feste Anbindung des Aktuators wird ein sehr steifes und schwingungsarmes System geschaffen. Außerdem ist keine komplizierte Verriegelung notwendig, wenn die Hinterkante der Frontklappe angehoben ist. Es ist völlig ausreichend, nur den Aktuator zu blockieren.

Ein weiteres Merkmal der Erfindung besteht darin, dass an dem Aktuator ein Festlager angeordnet ist, welches schwenkbar das erste Ende eines ersten Hebels aufnimmt. Durch das Festlager wird nicht nur eine sehr stabile, sondern auch eine kompakte Bauweise erreicht.

An dem zweiten Ende des ersten Hebels ist schwenkbar das erste Ende eines zweiten Hebels angeordnet, welches wiederum schwenkbar mit der Frontklappe verbunden ist. Zwischen den Enden des zweiten Hebels greift über ein Drehgelenk der Aktuator an. Diese Anordnung und Verbindung ist sehr kompakt und stabil, so dass zusätzliche Schwingungen im System vermieden werden.

Ein besonderer Vorteil und der Kern der Erfindung bestehen darin, dass durch die beschriebene Anordnung der lineare Aktuatorhub in eine definierte Aufstellbahn umgesetzt wird. Die Länge der Hebel und die Anordnung der Gelenke bzw. der Angriffspunkt des Aktuators sind dabei so gewählt, dass bei gegebenen fest eingespannten Aktuator die Hinterkante der Frontklappe eine annähernd ideale Kreisbahn ausführt, wenn die Hinterkante angehoben wird. Dadurch ergeben sich keine Relativbewegungen des Schlossbügels im Frontklappenschloss, also keine Zug- und Druckkräfte, die die Ursache für die eingangs genannten Probleme bei bekannten Lösungen sind. Durch die vorgeschlagene Anordnung wird vielmehr erreicht, dass der Schlossbügel bzw. das Frontklappenschloss im wesentlichen nur eine Drehbewegung beim Anheben der Hinterkante der Frontklappe aufnehmen müssen.

Beim normalen Öffnen der Frontklappe, also beim Anheben der Vorderkante der Frontklappe, wird der Aktuator nicht betätigt, so dass ein Eingelenkscharnier vorliegt, dessen Drehachse durch das Drehgelenk im Bereich der Hinterkante der Frontklappe, an dem das zweite Ende des zweiten Hebels angreift, gebildet wird.

Vorteilhaft ist, wenn der erste Hebel in Richtung auf den zweiten Hebel zu gekröpft ausgebildet ist. Dadurch lässt sich eine kompakte und stabile Bauweise realisieren, die verbessert an die gewünschte Bewegungsbahn der Hinterkante der Frontklappe angepasst werden kann.

Gemäß einer vorteilhaften Ausgestaltung der Erfindung kann die Vorrichtung ein Lagerteil umfassen, welches den Aktuator hält, an dem das Festlager ausgebildet ist und an dem Befestigungseinrichtungen zu seiner Festlegung an der Karosserie des Fahrzeuges angebracht sind. Über das Lagerteil lässt sich die Vorrichtung als vormontierte Baugruppe schnell und zuverlässig an der Karosserie befestigen. Das Lagerteil sorgt nicht nur für die Halterung des Aktuators, sondern bildet auch das Festlager und ist darüber hinaus mit Befestigungseinrichtungen zu seiner Festlegung an der Karosserie des Fahrzeuges versehen. Solche Befestigungseinrichtungen können beispielsweise Gewindebohrungen, Gewindestifte oder Löcher zur Aufnahme von Gewindebolzen sein.

Ein Ausführungsbeispiel der Erfindung ist in der Zeichnung dargestellt und wird nachfolgend näher beschrieben. Es zeigen
- Fig. 1: eine Vorrichtung zum Anheben der Hinterkante einer Frontklappe und
- Fig. 2: in einer graphischen Darstellung die Bewegung der einzelnen Gelenkpunkte der Vorrichtung gemäß Fig.1.

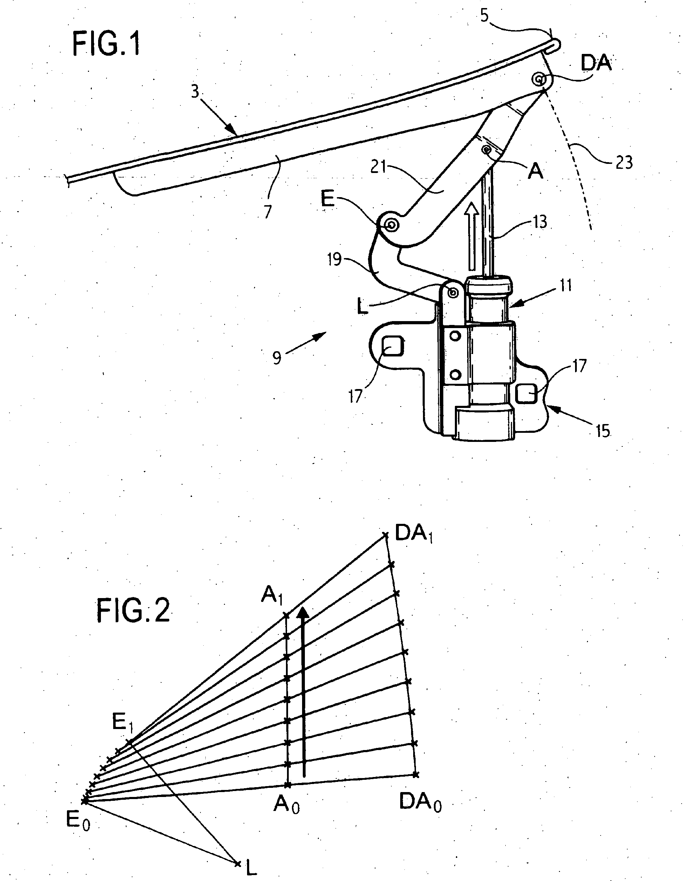

Fig. 1 zeigt einen Teil einer Frontklappe 3 mit einer Hinterkante 5 und einer seitlichen Verstärkung 7. Die Hinterkante 5 der Frontklappe 3 ist durch eine Vorrichtung 9 in eine Stellung angehoben, in der ein verbesserter Fußgängerschutz erreicht wird. In der Zeichnung ist nur eine von auf jeder Seite der Frontklappe 3 angeordneten Vorrichtungen 9 gezeigt.

Die Vorrichtung 9 umfasst im Einzelnen einen Aktuator 11, dessen Kolbenstange 13 eine Linearbewegung nach oben ausführen kann. In der ausgefahrenen Stellung der Kolbenstange 13 kann diese arretiert werden, was in der Zeichnung jedoch nicht näher dargestellt ist.

Der Aktuator 11 wird von einem Lagerteil 15 gehalten, welches mit Bohrungen 17 zu seiner Befestigung an der Karosserie eines Fahrzeuges ausgebildet ist. Außerdem weist das Lagerteil 15 ein Festlager L auf, in dem das erste Ende eines ersten Hebels 19 aufgenommen ist. Das zweite Ende des gekröpft ausgebildeten ersten Hebels 19 ist über ein Gelenk E mit dem ersten Ende eines zweiten Hebels 21 verbunden.

Wie Fig. 1 zeigt, steht das zweite Ende des zweiten Hebels 21 über ein Gelenk DA an der Verstärkung 7 der Frontklappe 3 in Verbindung. Schließlich ist zwischen den Gelenken E und DA am zweiten Hebel 21 ein Drehgelenk A vorgesehen, an dem das freie Ende der Kolbenstange 13 des Aktuators 11 angreift.

Das Gelenk DA bewegt sich beim Anheben der Hinterkante 5 der Frontklappe 3 von der Ausgangslage entlang einer Kreisbahn 23 in die in Fig.1 gezeigte Stellung. Der Drehpunkt der Kreisbahn wird dabei durch einen Schlossbügel gebildet, welcher im vorderen Bereich der Frontklappe 3 angeordnet ist (in der Zeichnung nicht dargestellt).

In Fig. 2 sind die Bewegungsbahnen der Gelenke E, DA und A graphisch wiedergegeben. Dabei entspricht der Index 0 der Ausgangslage, während der Index 1 die angehobene Stellung kennzeichnet.

## Patentansprüche

1. Fahrzeug mit einer in Scharnieren aufgenommenen Frontklappe (3), einem im vorderen Frontklappenbereich angeordneten Schloss und einer einen Aktuator (11) zur Erzeugung einer Linearbewegung umfassenden Vorrichtung zum Anheben der Hinterkante (5) der Frontklappe (3) wobei ein Festlager (L) angeordnet ist, welches schwenkbar das erste Ende eines ersten Hebels (19) aufnimmt,
wobei an dem zweiten Ende des ersten Hebels (19) schwenkbar das erste Ende eines zweiten Hebels (21) angeordnet ist,
wobei das zweite Ende des zweiten Hebels (21) schwenkbar mit der Frontklappe (3) verbunden ist, und
wobei zwischen den Enden des zweiten Hebels (21) über ein Drehgelenk (A) der Aktuator (11) angreift **dadurch gekennzeichnet,**
- **dass** der Aktuator (11) karosseriefest angeordnet ist, derart, dass er nur in eine vorgegebene Richtung nach oben ausfahrbar ist,
- **dass** das Festlager (L) an dem Aktuator (11) unter Bildung einer Baueinheit angeordnet ist,
- **dass** die Längen des ersten Hebels (19) und des zweiten Hebels (21) zusammen mit der Anordnung des Drehgelenks (A) so abgestimmt sind, dass die Hinterkante (5) der Frontklappe (3) bei der durch den Aktuator (11) bewirkten Ausstellbewegung der Frontklappe (3) eine Kreisbahn um das im vorderen Frontklappenbereich angeordneten Schloss ausführt.

2. Fahrzeug nach Anspruch 1, **dadurch gekennzeichnet, dass** der erste Hebel (19) in Richtung auf den zweiten Hebel (21) zu gekröpft ausgebildet ist.

3. Fahrzeug nach Anspruch 1 oder 2, **dadurch gekennzeichnet, dass** die Vorrichtung (9) ein Lagerteil (15) umfasst, welches den Aktuator (11) hält, an dem das Festlager ausgebildet ist und an dem Befestigungseinrichtungen (Bohrungen 17) zu seiner Festlegung an der Karosserie des Fahrzeuges angebracht sind.

4. Fahrzeug mit einer in zwei Scharnieren aufgenommenen Frontklappe, nach einem der Ansprüche 1 bis 3, **dadurch gekennzeichnet, dass** jedem Scharnier ein Aktuator (11) zugeordnet ist.

## Claims

1. Vehicle having a front bonnet (3) received in hinges, a lock arranged in the front region of the front bonnet, and a device for raising the rear edge (5) of the front bonnet (3) that comprises an actuator (11) for producing linear movement, a stationary mounting (L) being arranged which pivotally receives the first end of a first lever (19), the first end of a second lever (21) being pivotally arranged at the second end of the first lever (19), the second end of the second lever (21) being pivotally connected with the front bonnet (3), and the actuator (11) engaging by way of a hinge pivot (A) between the ends of the second lever (21), **characterised in that** the actuator (11) is arranged fast with the vehicle body in such a way that it can only be extended in a predetermined upwardly direction, **in that** the stationary mounting (L) is arranged on the actuator (11) so as to form a mounting unit, and **in that** the lengths of the first lever (19) and the second lever (21), together with the arrangement of the hinge pivot (A), are coordinated in such a way that the rear edge (5) of the front bonnet (3) performs a circular path about the lock arranged in the front region of the front bonnet when the actuator (11) causes upward movement of the front bonnet (3).

2. Vehicle according to claim 1, **characterised in that** the first lever (19) is formed cranked in the direction towards the second lever (21).

3. Vehicle according to claim 1 or 2, **characterised in that** the device (9) comprises a mounting member (15) which holds the actuator (11) and on which the stationary mounting is formed and on which are arranged the fastening arrangements (holes 17) for securing it to the body of the vehicle.

4. Vehicle, having a front bonnet received in two hinges, according to one of claims 1 to 3, **characterised in that** each hinge has an actuator (11) associated with it.

## Revendications

1. Véhicule doté d'un capot avant (3) logé dans des charnières, d'une serrure disposée dans la zone avant du capot avant et d'un dispositif comportant un actionneur (11) pour la génération d'un mouvement linéaire destiné à relever l'arête arrière (5) du capot avant (3) ,
dans lequel un palier fixe (L) est disposé, lequel reçoit à pivotement la première extrémité d'un premier levier (19),
dans lequel la première extrémité d'un second levier (21) est disposée à pivotement sur la seconde extrémité du premier levier (19),
dans lequel la seconde extrémité du second levier (21) est reliée à pivotement au capot avant (3), et
dans lequel l'actionneur (11) agit entre les extrémités du second levier (21) par le biais d'une articulation tournante (A), **caractérisé en ce que**,
- l'actionneur (11) est disposé de manière fixée à la carrosserie de sorte qu'il puisse être déployé seulement dans une direction prescrite vers le haut,
- le palier fixe (L) étant disposé sur l'actionneur (11) en formant une unité structurelle,
- les longueurs du premier levier (19) et du second levier (21) étant adaptées conjointement avec l'ensemble de l'articulation tournante (A) de sorte que l'arête arrière (5) du capot avant (3) réalise, lors du mouvement d'ouverture provoqué par l'actionneur (11) du clapet frontal (3), une trajectoire circulaire autour de la serrure disposée dans la zone avant du capot avant.

2. Véhicule selon la revendication 1, **caractérisé en ce que** le premier levier (19) est réalisé coudé en direction du second levier (21).

3. Véhicule selon la revendication 1 ou 2, **caractérisé en ce que** le dispositif (9) comporte un élément de palier (15) qui maintient l'actionneur (11), sur lequel est réalisé le palier fixe et sur lequel sont montés des dispositifs de fixation (perçages 17) pour sa fixation sur la carrosserie du véhicule.

4. Véhicule avec un capot avant logé dans deux charnières, selon l'une quelconque des revendications 1 à 3, **caractérisé en ce qu'**un actionneur (11) est associé à chaque charnière.
